# EUROPÄISCHE PATENTANMELDUNG

(11) **EP 0 763 421 A2**
(43) Veröffentlichungstag der Anmeldung: **19.03.1997**
(21) Anmeldenummer: 96113167.9
(22) Anmeldetag: 16.08.1996
(51) Int. Cl.: B32B 27/18

(54) **Verbundstoff aus Direktextrusion**

(30) Priorität: 14.09.1995 DE 19534012
(71) Anmelder: BASF Lacke und Farben AG, 48165 Münster (DE)
(72) Erfinder: Kiriazis, Leonidas, Dr., 48165 Münster (DE)
(74) Vertreter: Fitzner, Uwe, Dr.

(57) **Zusammenfassung**

Verbundwerkstoffe aus mindestens einer Kunststoffschicht auf einem Träger, ggf. mit einer zwischenliegenden Schicht eines Haftvermittlers oder Klebers, hergestellt durch Direktextrusion des geschmolzenen Kunststoffes und/oder Haftvermittlers unmittelbar auf den Träger und anschließende Weiterverarbeitung, wobei Kunststoff oder Haftvermittler Metalle und/oder anorganische Teilchen enthalten.

## Beschreibung

Die vorliegende Erfindung betrifft einen Verbundwerkstoff aus mindestens einer Kunststoffschicht auf einem Träger, ggf. mit einer zwischenliegenden Schicht eines Haftvermittlers oder Klebers.

Der Herstellung einer ausreichenden Adhäsionsverbindung im Verbund zwischen einer Kunststoffbeschichtung und einem Trägermaterial kommt für die Haltbarkeit des Endmaterials zentrale Bedeutung zu. Das hierfür angewendete Herstellungsverfahren bestimmt daher letztendlich, welches Endprodukt erhalten wird. Das nach dem Stand der Technik am häufigsten anzutreffende Beschichtungsverfahren ist das Aufbringen (Laminieren, Kaschieren) einer vorgefertigten Kunststoffolie. Für einige wenige Spezialfälle wird dagegen auch die sog. Direktextrusion beschrieben, d.h. das Aufbringen von plastifiziertem Kunststoff aus einem Extruder unmittelbar auf den zu beschichtenden Träger. So beschreibt z.B. die EP 0 038 075 das Aufbringen eines Films aus Polyethylen bzw. Polypropylen auf einen Träger. Dieser Träger hat einen komplexen Aufbau aus mehreren Materialschichten, deren Dicke insgesamt ein Mehrfaches der Dicke der Kunststoffbeschichtung beträgt.

Auch die EP 031 701 beschreibt die Erzeugung eines Kunststofflaminates, bei dem eine Komponente, nämlich der Haftvermittler, durch Direktextrusion aufgebracht wird. Er wird in geschmolzener Form zwischen Trägermetall und Kunststoffolie gegeben und dort durch Presswalzen verteilt.

Die genannten Anwendungen der Direktextrusion betreffen die Verwendung spezieller Träger- und Beschichtungsmaterialien. Dies hat seinen Grund darin, daß die Gewährleistung einer akzeptablen Produktqualität, d.h. insbesondere einer ausreichenden und gleichmäßigen Beschichtungsdicke, mit der Direktextrusionsmethode problematisch ist. Die Verwendung vorgefertigter Folien bekannter Schichtstärke führt demgegenüber mit großer Sicherheit zu einem Produkt der gewünschten Eigenschaften. Daher wird das letztgenannte Verfahren im Stand der Technik fast ausschließlich angewandt, während gegen die Direktextrusion erhebliche Vorurteile bestehen.

Nach dem Stand der Technik werden zur Herstellung einer Dose oder eines Verschlusses für den Einsatz als Verpackungsmaterial, insbesondere für die Verpackung von Lebensmitteln, Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführte Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu Dosen oder Verschlüssen auftretenden mechanischen Beanspruchungen, etwa beim Verformen, Stanzen, Bördeln, Sicken u.ä., standhalten.

Als häufiges Verfahren für die Beschichtung von Blechen, die insbesondere zur Herstellung von Lebensmittelverpackungen eingesetzt werden, wird die Folienbeschichtung von Metallblechen eingesetzt. So ist beispielsweise in der DE-OS 3128641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird. Weiterhin sind auch aus der DE-OS 2912023, der GB-A-2027391 und der EP-B-31701 Laminate und aus diesen Laminaten hergestellte Lebensmittelverpackungsbehälter, insbesondere Beutel, bekannt.
Nachteilig an diesen Verfahren ist, daß zuerst eine eigenständige Kunststoffolie hergestellt werden muß, die insbesondere eine gewisse Mindestdicke haben muß, um tragfähig zu sein.

Die vorliegende Erfindung hat sich gegenüber dem bekannten Stand der Technik die Aufgabe gestellt, neue Verbundwerkstoffe zu entwickeln, die verbesserte Hafteigenschaften zwischen Träger und Beschichtung haben und deren Mindestbeschichtungsdicke verringert ist, d.h. mit denen dünnere Kunststoffschichten hergestellt werden können als nach dem Stand der Technik.

Diese Aufgabe wird gelöst durch einen Verbundwerkstoff aus mindestens einer Kunststoffschicht auf einem Träger, ggf. mit einer zwischenliegenden Schicht eines Haftvermittlers oder Klebers, wobei
1) die Kunststoffschicht und/oder die Haftvermittlerschicht und/oder die Kleberschicht mindestens 0,1 Gew.-%, bevorzugt 0,5 bis 8 Gew.-%, bezogen auf ihr Gesamtgewicht, eines oder mehrerer metallischer Pulver, vorzugsweise aus Aluminiumpulver, Magnesiumpulver, Zinkpulver und Manganpulver, und/oder eines Pulvers bestehend aus Zinkoxid und/oder Manganoxid enthält,
2) der Verbund erhalten wird durch Direktextrusion des geschmolzenen Kunststoffes und/oder Haftvermittlers unmittelbar auf den Träger und anschließende Weiterverarbeitung, vorzugsweise durch Pressen, Kühlen und/oder Glätten, und
3) der Träger aus Metall, vorzugsweise Aluminium, Weißblech oder (chromatiertem) Stahl, oder aus Holz, Furnier, Papier oder Kunststoff besteht.

Bei der Herstellung des erfindungsgemäßten Verbundstoffes wird der Kunststoff oder ein Haftvermittler im geschmolzenen Zustand aus einem Extruder heraus auf den Träger aufgebracht. Dort erfolgt dann die Verteilung, das Anpressen und die Erzeugung einer homogenen Schicht vorgegebener Stärke durch die Führung des Materials durch ein System von Andruckrollen. Anschließende Verarbeitungsschritte schließen u.a. ein Kühlen und Glätten des Materials ein.

Die erfindungsgemäßen Verbunde haben den Vorteil einer verbesserten Haftung auf dem Substrat. Außerdem können sie in geringeren Schichtdicken aufgetragen werden, da der Zwischenschritt einer Folienherstellung entfallen kann. Die hieraus resultierende Folie muß nämlich eine Mindestsdicke haben, um sich selbst tragen zu können. In der Regel kann die Dicke der Folie daher ca. 18 µm nicht unterschreiten. Bei der Direktextrusion existieren derartige Begrenzungen nicht, es können daher geringere Schichtdicken, z.B. 1-5 µm, aufgetragen werden. Neben veränderten Materialeigenschaften kann somit eine erhebliche Materialersparnis erzielt werden.
Da der Kunststoff nicht mehr in Form einer Folie hergestellt werden muß, bevor er auflaminiert wird, kann durch die Direktextrusion auch ein kompletter Produktionsschritt entfallen. Dies führt zu einer erheblichen Kosten- und Zeitersparnis.

Der Verbundwerkstoff enthält einen Träger aus Metall, vorzugsweise Aluminium oder Stahl, oder aus Holz, Furnier, Papier oder Kunststoff. Für die folgende Beschreibung wird zur Vereinfachung von einem Metallträger ausgegangen. Der Träger ist beschichtet mit mindestens einer Kunststoffschicht, ggf. mit einer zwischenliegenden Schicht eines Haftvermittlers oder Klebers. Der Kunststoff, der Haftvermittler und/oder der Kleber ist dadurch gekennzeichnet, daß er mindestens 0,1 Gew.-%, vorzugsweise 0,5 bis 8 Gew.-%, bezogen auf sein Gesamtgewicht, eines oder mehrerer metallischer Pulver, ausgewählt aus Aluminiumpulver, Magnesiumpulver, Zinkpulver und Manganpulver, und/oder eines Pulvers bestehend aus Zinkoxid und/oder Manganoxid enthält.

Vergleichbare Verbundstoffe sind in der DE-41 37 139 und der DE-42 17 796 beschrieben, allerdings ohne den charakteristischen Herstellungsschritt der Direktextrusion.

Die mittlere Teilchengröße der Metallpulver liegt bevorzugt im Bereich von 5 bis 20 µm. Bevorzugt wird als Metallpulver Aluminiumpulver eingesetzt. Ein geeignetes Al-Pulver ist beispielsweise unter der Bezeichnung "Aluminiumpulver Glanzschliff Lotos Vollton" erhältlich (Eckart-Werke).

Zur Herstellung von beschichteten Metallblechen geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind. Je nach Verwendungszweck sind auch Stärken von mehr als 1 mm geeignet.

Die erfindungsgemäß als Deckschicht verwendeten thermoplastischen Harze, die auch in Form von Folien oder Filmen vorliegen können, umfassen Polyolefine, Polyamide, Polyester, Polyvinylchlorid, Polyvinylidenchlorid, Polyurethane und Polycarbonate. Sie umfassen auch zusammengesetzte Folien und Filme (Verbundfolie und -filme), die beispielsweise erhalten werden durch gemeinsames Extrudieren von mindestens zwei der obengenannten Polymeren. Die bevorzugte thermoplastische Folie oder der bevorzugte thermoplastische Film, die (der) die innerste Schicht (dies ist die mit den Füllgütern in Kontakt stehende Schicht) der Metall-Verbunde darstellt, umfaßt bevorzugt eine Folie oder einen Film aus einem Polyolefin, Polyester oder Polyamid. Derartige Folien und Filme sind bekannt und in eine Vielzahl auf dem Markt erhältlich.

Derartige Polyolefinfolien werden nach bekannten Verfahren (Blasverfahren, Chill-roll Verfahren etc.) aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylen (PE-LLD, PE-VLD), Polypropylen, dessen Copolymere mit Ethylen sowie die Copolymeren aus Ethylens mit einem oder mehrerer Comonomeren aus den Gruppen der Vinylester, Vinylalkylether, ungesättigten Mono- und Dicarbonsäuren, deren Salzen, Anhydriden und Estern.

Diese Polyolefine sind beispielsweise unter den folgenden Markennamen im Handel erhältlich:
Escorene^{Û}, Lupolen^{Û}, Lotader^{Û}, Lacqtene^{Û}, Orevac^{Û}, Lucalen^{Û}, Dowlex^{Û}, Primacor^{Û}, Surlyn^{Û}, Admer^{Û}, Novatec^{Û}, Sclair^{Û}, Stamylan^{Û} u.a.

Beispiele für als Deckschicht geeignete Polyamide sind Polyamid 6 (Polyamid hergestellt aus ε-Aminocapronsäure), Polyamid 6,6 (Polyamid hergestellt aus Hexamethylendiamin und Sebacinsäure), Polyamid 66,6 (Mischpolyamid, das aus Polyamid 6 und Polyamid 6,6 besteht), Polyamid 11 (Polyamid hergestellt aus ω-Aminoundecansäure) und Polyamid 12 (Polyamid hergestellt aus ω-Aminolaurinsäure oder aus Lauryl-lactam). Beispiele für Handelsprodukte sind Grilon^{Û}, Sniamid^{Û} und Ultramid^{Û}.

Bevorzugt eingesetzte Polyester sind Polyethylenterephthalat, Polybutylenterephthalat sowie Polyester auf Basis von Terephthalsäure, Ethylen- und Butylenglykol. Geeignet sind aber auch andere Polyester auf Basis von Terephthalsäure, Isophthalsäure und Phthalsäure und verschiedener Polyole wie z.B. Polyethylenglykol und Polytetramethylenglykole unterschiedlichen Polymerisationsgrades.

Beispiele für geeignete Handelsprodukte sind Hostaphan^{Û}, Melinex^{Û} und Hostadur^{Û}, Ultradur^{Û}. Als Beispiel für ein geeignetes Handelsprodukt auf Polyurethanbasis sei Elastolan^{Û} der Firma BASF AG genannt.

Unter Haftvermittlern sollen im Gegensatz zu Klebstoffen feste haftvermittelnde Kunststoffe verstanden werden, die zusammen mit dem thermoplastischen Kunststoff coextrudiert werden und auf der Innenseite des coextrudierten Kunststoffilms zu einer Haftvermittlerschicht ausgebildet werden.

Als Haftvermittler können sowohl Copolymere, Terpolymere, Pfropfcopolymere und Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16 kg zwischen 0,1 und 30 g/10 min, bevorzugt zwischen 0,2 und 25 g/10 min und besonders bevorzugt zwischen 0,5 und 20 g/10 min liegt.

Geeignete Co- bzw. Terpolymere sind herstellbar durch Copolymerisation von Ethylen mit α,β-ungesättigten Carbonsäuren wie z.B. Acrylsäure, Methacrylsäure, Ita-consäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest wie z.B. die Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.

Geeignete Pfropfcopolymere sind herstellbar durch Pfropfung von mindestens einem Polymeren aus der Gruppe der Polyolefine mit bis 10 Gew.-%, bevorzugt bis zu 5 Gew-%, bezogen auf das Gesamtgewicht der Monomeren, mindestens eines Monomeren aus der Gruppe der α,β-ungesättigten Carbonsäuren, deren Anhydride, deren Estern oder Salzen in Gegenwart oder Abwesenheit von Peroxiden. Beispiele von geeigneten Polyolefinen sind die bereits bei der Beschreibung der Deckschichten dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen α,β-ungesättigten Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Es kommen auch Haftvermittler auf Polyurethanbasis in Frage.

Sowohl die Haftvermittlerschicht als auch die thermoplastische Kunststoffschicht können noch übliche Additive wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem entsprechenden Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditve, Carl-Hanser Verlag zu entnehmen. Bevorzugt werden diese Additive in die thermoplastische Kunststoffschicht eingearbeitet.

Die ggf. verwendeten Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m² Fläche. Besonders geeignete Klebstoffe sind die synthetischen Klebstoffe, bestehend aus thermoplastischen Harzen wie Celluloseester, Celluloseether, Alkyl- oder Acrylester, Polyamide, Polyurethane und Polyester, aus wärmehärtenden Harzen wie Epoxyharzen, Harnstoff/Formaldehydharzen, Phenol/Formaldehydharzen und Melamin- Formaldehydharzen oder aus synthetischen Kautschuken.

Die Klebstoffschicht kann auch aus einem zweikomponentigen lösemittelhaltigen Polyurethanklebstoff erhalten werden. Zum Aufbringen des Klebstoffes auf das Metallblech kann jedes geeignete Verfahren angewendet werden. Der Zweikomponenten-Polyurethanklebstoff wird durch Auftragen aus Lösungen in organischen Lösemitteln aufgebracht. Die Lösungen haben in der Regel einen Klebstoffgehalt von 5 bis 80 Gew.-%. Die aufgebrachte Klebstoffmenge beträgt in der Regel etwa 1 bis 15 g/m² Fläche.

Der Zweikomponenten-Polyurethanklebstoff besteht aus einer OH-haltigen Komponente (I), zum Beispiel aus Polyesterpolyolen, Polyetherpolyolen oder niedermolekularen Polyolen, und aus einer isocyanatgruppenhaltigen Komponente (II). Die beiden Kompononten werden unmittelbar vor dem Auftrag auf das Substrat miteinander vermischt.

Bevorzugt werden als Komponente (I) des 2K-Klebstoffes Polyesterpolyole verwendet. Diese werden hergestellt durch Veresterung von Dicarbonsäuren mit überschüssigen Di- bzw. Polyolen.

Die Veresterung verläuft bei höherer Temperatur in Lösung oder in der Schmelze. Aus Dicarbonsäuren und Glykolen entstehen linear aufgebaute Polyester, während die Veresterung bei Mitverwendung von Triolen und/oder höherwertigen Polyolen zu mehr oder weniger verzweigten Polyestern führt. Die Polyesterpolyole sind erhältlich durch Umsetzung von Polycarbonsäuren oder deren veresterungsfähigen Derivaten, ggf. zusammen mit Monocarbonsäuren, Polyolen, ggf. zusammen mit Monoolen, sowie ggf. weiteren modifizierenden Komponenten.

Beispiele für geeignete Polycarbonsäuren sind Phthalsäure, Isophthalsäure, Terephthalsäure, Halogenphthalsäuren, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Cyclohexantetracarbonsäure und Cyclobutantetracarbonsäure.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxialkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten zur Herstellung der Polyester sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydoxiethylisocyanurat, Polyethylenglykol, Polypropylenglykol, gegebenenfalls zusammen mit einwertigen Alkoholen, wie beispielsweise Butanol, Octanol, Laurylalkohol, ethoxylierten bzw. propxylierten Phenolen.

Geeignete modifizierende Komponenten sind Polyisocyanate und/oder Diepoxidverbindungen, ggf. auch Monoisocyanate und/oder Monoepoxidverbindungen.

Als OH-Komponente (I) des Zweikomponenten-Polyurethan-klebstoffs sind auch Polyetherpolyole, die z.B. durch Anlagerung von Ethylenoxid oder Propylenoxid an geeig-nete Polyole erhältlich sind, geeignet.

Als isocyanatgruppenhaltige Komponente (II) des Polyurethanklebstoffes sind beispielsweise geeignet:

Aromatische Isocyanate, wie z.B. 2,4-, 2,6-Toluylendi-isocyanat und deren Gemische, 4,4'-Diphenylmethandiiso-cyanat, m-Phenylen-, p-Phenylen-, 4,4-Diphenyl-, 1,5-Naphthalin-, 1,4-Naphthalin-, 4,4-Toluidin-, Xylylendiisocyanat sowie substituierte aromatische Systeme, wie z.B. Dianisidindiisocyanate, 4,4-Diphenyletherdiisocyanate oder Chlorodiphenylendiisocyanate und höherfunktionelle aromatische Isocyanate, wie z.B. 1,3,5-Triisocyanatobenzol, 4,4', 4''-Triisocyanattriphe-nylmethan, 2,4,6-Triisocyanatotoluol und 4,4'-Diphenyl-dimethylmethan-2,2', 5,5'-tetraisocyanat; cycloaliphatische Isocyanate, wie z.B. 1,3-Cylocopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylentriisocyanat.

Weiterhin können als isocyanatgruppenhaltige Komponente (II) auch Präpolymere mit höherer Molmasse verwendet werden. Zu nennen sind hierbei Addukte aus Toluylendiisocyanat und Trimethylolpropan, ein aus 3 Molekülen Hexamethylendiisocyanat gebildetes Biuret sowie die Trimeren des Hexamethylendiisocyanates und des 3,5,5-Trimethyl-1-isocyanato-3-isocyanatomethylcyclohexans.

Die Menge der Komponente (II) wird so gewählt, daß das Verhältnis der Isocyanatgruppen von (II) zu den OH-Gruppen (I) i. a. im Bereich von 1:3 bis 3:1 liegt.

Geeignete Isocyanatkomponenten (II) sind beispielsweise die auf dem Markt unter der Bezeichnung Desmodur^{Û} N und Desmodur^{Û} L (Bayer AG) erhältlichen Isocyanatlösungen. Geeignete Lösungsmittel für die Isocyanatkomponenten sind beispielsweise Butylacetat und Ethylacetat. Ein weiterer geeigneter 2K-Polyurethanklebstoff ist der unter der Handelsbezeichnung Adcote 549 B/Catalyst F der Firma Morton Internationl B.V. erhältliche Kleber.

Besonders bevorzugt wird als Zweikomponenten-Klebstoff ein OH-haltiger Polyester, der als Carbonsäurekomponente im wesentlichen oder vollständig Isophthalsäure und/oder Terephthalsäure enthält und als Isocyanatkomponente ein Polyurethanpräpolymer auf Basis von Toluylendiisocyanat verwendet. Der Polyester kann mit Di- und/oder Monoepoxidverbindungen modifiziert sein.

Die erfindungsgemäßen Kunststoffolien und Metall-Kunststoff-Verbunde weisen auch ohne biaxiale Orientierung der Kunststoffilme hervorragende Barriere-Eigenschaften, d.h. eine geringe Lichtdurchlässigkeit, eine geringe Wasserdampf- und Gasdurchlässigkeit auf. Sie sind daher hervorragend geeignet für die Verpackung von Lebens- und Genußmitteln, wobei sie bevorzugt zur Verpackung oxidationsempfindlicher Lebens- und Genußmittel verwendet werden.

Erfindungsgemäße Verbunde, die ein Pulver aus Zinkoxid und/oder Manganoxid enthalten, werden hergestellt, indem ein thermoplastischer Kunststoff mit dem Zinkoxidpulver und/oder dem Manganoxidpulver vermischt und zusammen mit einem Haftvermittler coextrudiert wird und/oder ein thermoplastischer Kunststoff mit einer Mischung aus Haftvermittler und Zinkoxidpulver und/oder Manganoxidpulver coextrudiert wird, oder indem das Zinkoxidpulver und/oder Manganoxidpulver in einen lösemittelhaltigen oder wäßrigen Klebstoff eingearbeitet wird und der Klebstoff auf ein erhitztes Metallblech appliziert wird.

Es ist vorteilhaft, das anorganische Pulver durch Seitenbeschickung des Extruders in die Kunststoffschmelze einzuführen. Vorzugsweise werden Doppelschneckenextruder verwendet. Es ist bevorzugt, eine mehrstufige Extrusion durchzuführen, wobei in der ersten Extrusionsstufe das anorganische Pulver zusammen mit einem Teil des Kunststoffs unter Herstellung einer Folie mit einem hohen Füllstoffgehalt extrudiert wird und in einer zweiten Stufe das aus der Folie erhaltene Granulat mit weiterem thermoplastischem Pulver extrudiert wird. Auf diese Weise wird eine bessere Homogenisierung der Mischung aus Kunststoff und Füllstoff erreicht.

Die erfindungsgemäß verwendeten thermoplastischen Kunststoffe umfassen Polyolefine, Polyamide, Polyester, Polyvinylchlorid, Polyvinylidenchlorid, Polyurethane und Polycarbonate, jeweils auch in Form einer Folie oder eines Films. Sie umfassen auch zusammengesetzte Folien und Filme (Verbundfolie und -filme), die beispielsweise erhalten werden durch gemeinsames Extrudieren von mindestens zwei der obengenannten Polymeren. Die bevorzugte thermoplastische Folie oder der bevorzugte thermoplastische Film umfaßt bevorzugt eine Folie oder einen Film aus einem Polyolefin, Polyester oder Polyamid. Derartige Folien und Filme sind bekannt und in einer Vielzahl auf dem Markt erhältlich.

Derartige Polyolefinfolien werden nach bekannten Verfahren (Blasverfahren, Chill-roll-Verfahren etc.) aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylen (PE-LLD, PE-VLD), weiterhin Polypropylen-Copolymerisate, die im allgemeinen aus 92 bis 99 Gew.-% Propylen und 1 bis 8 Gew.-%, bezogen auf das Monomerengesamtgewicht, Comonomeren erhalten werden. Geeignete Comonomere sind andere C2- bis C12-a-Monoolefine, vorzugsweise C2- bis C6-a-Monoolefine, wie Ethylen, Buten-1, 4-Methylpenten-1, Hexen-1, n-Okten-1, n-Decen-1 und n-Dodecen-1. Geeignete Polypropylene sowie Verfahren zu ihrer Herstellung sind beispielsweise beschrieben in der DE-A-37 30 022.

Weitere geeignete thermoplastische Kunststoffe sind Copolymerisate des Ethylens, beispielsweise mit Comonomeren aus der Gruppe der Vinylester, Vinylalkylether, ungesättigten Mono- und Dicarbonsäuren, deren Salzen, Anhydriden und Estern.

Die Polyolefin-Kunststoffe sind beispielsweise unter den folgenden Markennamen im Handel erhältlich: Escorene^{Û}, Lupolen^{Û}, Lotader^{Û}, Lacqtene^{Û}, Orevac^{Û}, Lucalen^{Û}, Dowlex^{Û}, Primacor^{Û}, Surlyn^{Û}, Admer^{Û}, Novolen^{Û}, Sclair^{Û}, Stamylan^{Û} u.a.

Beispiele für das thermoplastische Kunststoffe geeignete Polyamide sind Polyamid 6 (Polyamid, hergestellt aus ε-Aminocapronsäure), Polyamid 6,6 (Polyamid, hergestellt aus Hexamethylendiamin und Sebacinsäure), Polyamid 66,6 (Mischpolyamid, das aus Polyamid 6 und Polyamid 6,6 besteht), Polyamid 11 (Polyamid, hergestellt aus ω-Aminoundecansäure) und Polyamid 12 (Polyamid, hergestellt aus ω-Aminolaurinsäure oder aus Lauryllactam). Beispiele für Handelsprodukte sind Grilon^{Û}, Sniamid^{Û}, und Ultramid^{Û}.

Bevorzugt eingesetzte Polyester sind Polyethylenterephthalat, Polybutylenerephthalat. Geeignet sind aber auch andere Polyester auf Basis von Terephthalsäure, Isophthalsäure und Phthalsäure und verschiedener Polyole, wie z.B. Polyethylenglykol und Polytetramethylenglykole unterschiedlichen Polymerisationsgrades. Beispiele für geeignete Handelsprodukte sind Hostaphan^{Û}, Melinex^{Û}, Hostadur^{Û} und Ultradur^{Û}.

Ein Beispiel für ein geeignetes Handelsprodukt auf Polyurethanbasis ist Elastolan^{Û} der Firma BASF AG.

Bevorzugt werden Kunststoffolien eingesetzt, die erhalten werden durch Extrusion von statistischem Polypropylen-Copolymerisat, besonders bevorzugt von Polypropylencopolymerisat aus 1 bis 4 Gew.-% Ethylen und 96 bis 99 Gew.-% Propylen, jeweils bezogen auf das Gesamtgewicht der Monomerenzusammensetzung.

Die erfindungsgemäßen Metall-Kunststoffolie-Verbunde enthalten mindestens 0,1 Gew.-%, bevorzugt 0,5 bis 8 Gew.-%, bezogen auf das Gesamtgewicht des thermoplastischen Kunststoffs der Kunststoffolie und der anorganischen Oxide, Zinkoxidpulver und/oder Manganoxid-pulver. Bevorzugt werden die genannten Pulver in einem Anteil von 2 bis 4 Gew.-%, wobei besonders bevorzugt Zinkoxidpulver in einem Anteil von 2 bis 4 Gew.-% in die Kunststoffolie des Metall-Kunststoffolie-Verbundes eingearbeitet wird, verwendet.
Als Zinkoxidpulver kommen beispielsweise das unter der Handelsbezeichnung "Zinkoxyd aktiv" erhältliche Produkt der Firma Bayer AG sowie das unter der Handelsbezeichnung "Zinkoxid Harz-siegel NT/S" der Firma Heubach in Frage.

Besonders bevorzugt liegt die mittlere Teilchengröße des Zinkoxidpulvers und des Manganoxidpulvers im Bereich von 0,1 bis 10 µm. Dabei hängt die Teilchengröße des verwendeten oxidischen Pulvers selbstverständlich ab von der Dicke der Schicht, in die das Pulver eingearbeitet ist.

Die oxidischen Pulver können gemäß der vorliegenden Erfindung in der thermoplastischen Kunststoffolie des Metall-Kunststoffolie-Verbundes eingearbeitet sein. In diesem Fall wird eine Mischung aus dem thermoplastischen Kunststoff und des Zinkoxidpulvers und/oder Manganoxidpulvers zusammen mit weiteren Additiven, wie Gleitmitteln, Stabilisatoren, Farbstoffen, Pigmenten, Antistatika, Antiblockmitteln und dergleichen zu einer Kunststoffolie extrudiert, wobei diese dann mit Hilfe eines direkt-extrudierten Haftvermittlers auf ein Metallblech laminiert wird.

Die Kunststoffolien der erfindungsgemäßen Metall-Kunst-stoffolie-Verbunde können zweckmäßigerweise Additive, wie Gleitmittel, Stabilisatoren, Farbstoffe, Pigmente, Antistatika, Antiblockmittel und dergleichen in jeweils wirksamer Menge enthalten. Die Additive werden in den für die Herstellung, Verarbeitung, Konfektionierung und Anwendung notwendigen Mengen in Form von Pulver, Puder, Perlen oder einem direkt in dem Polymer eingearbeiteten Konzentrat eingesetzt. Nähere Angaben zu den üblicher-weise eingesetzten Mengen und Beispiele für geeignete Additive sind beispielsweise dem Gächter-Müller, Kunststoffadditive, Carl-Hanser-Verlag zu entnehmen.

Die zuvor genannten Additive können selbstverständlicherweise auch in die Haftvermittlerschicht eingearbeitet werden.

Als Haftvermittler können sowohl Copolymere, Terpolymere, Pfropfcopolymere und Ionomere sein mit der Maßgabe, daß sie Carboxyl- oder Anhydridgruppen oder Gruppen, die zu Carboxylgruppen hydrolisierbar sind, aufweisen und daß der Schmelzindex der Polymeren, gemessen bei 190°C und einer Belastung von 2,16 kg zwischen 0,1 und 30 g/10 min., bevorzugt zwischen 0,2 und 25 g/10 min, und besonders bevorzugt zwischen 0,5 und 20 g/10 min. liegt.

Geeignete Co- bzw. Terpolymere sind herstellbar durch Copolymerisation von Ethylen mit α,β-ungesättigten Carbonsäuren, wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest, wie z.B. die Methyl-, Ethyl-, Propyl-, Butyl-, Pentyl-, Hexyl-, Cyclohexyl-, Heptyl-, Octyl- und 2-Ethylhexylester der aufgeführten Säuren. Eben-falls einsetzbar sind auch die entsprechenden Salze der aufgeführten Carbonsäuren, etwa die Natrium-, Kalium-, Lithium-, Magnesium-, Calcium-, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.

Geeignete Propfcopolymere sind herstellbar durch Pfropfung von mindestens einem Polymeren aus der Gruppe der Polyolefine mit bis zu 10 Gew.-%, bevorzugt bis zu 5 Gew.-%, bezogen auf das Gesamtgewicht der Monomeren, mindestens eines Monmeren aus der Gruppe der α,β-ungesättigten Carbonsäuren, deren Anhydriden, deren Estern oder Salzen in Gegenwart oder Abwesenheit von Peroxi-den. Beispiele von geeigneten Polyolefinen sind die bereits bei der Beschreibung der Kunststoffe für die Kunststoffolien dieser Beschreibung aufgeführten Poly-olefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen α,β-ungesättigter Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in Lösung durchgeführt werden. Die Mengen an basischer Verbindung wird dabei so gewählt, daß der Neutralisationsgrad des Polymers zwischen 0,1 und 99 %, bevorzugt zwischen 0,1 und 75 %, und ganz besonders bevorzugt zwischen 0,1 und 40 % liegt.

Es kommen auch Haftvermittler auf Polyurethanbasis in Frage.

Gemäß der vorliegenden Erfindung können die oxidischen Pulver auch in die Haftvermittlerschicht eingearbeitet werden, wobei zur Herstellung der Laminate zunächst eine Mischung des Haftvermittler-Kunststoffs und des Zinkoxidpulvers und/oder Manganoxidpulvers hergestellt wird.

Anstelle einer Haftvermittlerschicht kann auch ein wäßriger oder ein lösemittelhaltiger Klebstoff die Haftung zwischen der Kunststoffolie und dem Metallblech bewirken. Die Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 10 g/m2-Fläche. Besonders geeignete Klebstoffe sind die synthetischen Klebstoffe, bestehend aus thermoplastischen Harzen, wie Celluloseester, Celluloseether, Alkyl- oder Acrylester, Polyamide, Polyurethane und Polyester, aus wärmehärtenden Harzen, wie Epoxyharzen, Harnstoff/Formaldehydharzen, Phenol/Formaldehydharzen und Melamin-Formaldehydharzen oder aus synthetischen Kautschuken.
Es ist möglich, daß das Zinkoxidpulver und/oder Manganoxidpulver auch in die zwischen thermoplastischem Kunststoff und Metall angeordneten Klebeschicht eingearbeitet wird.

Als Metallbleche der erfindungsgemäßen Metall-Kunststoffolie-Verbunde kommen alle Eisen- und Zinnhaltigen Bleche in Frage, z.B. Metalle aus Schwarzblech, Weißblech, Eisen und aus entsprechenden Legierungen, die ggf. mit einer Passivierungsschicht versehen sind. Geeignete Metallisierungsverfahren sind die Elektroplattierung, das Besputtern und die Vakuumbedampfung. Um eine gute Haftung der Metallschicht auf der zu metallisierenden Fläche zu erreichen, wird diese Fläche vorher einer Korona-Behandlung ausgesetzt. Gemäß der vorliegenden Erfindung kommen Metallbleche in Frage, die eine Stärke von mindestens 0,08 mm aufweisen. Bevorzugt sind Metallbleche mit einer Stärke von 0,08 bis 1 mm. Je nach Verwendungszweck sind auch Stärken von mehr als 1 mm geeignet.

Gemäß der vorliegenden Erfindung sind unter den Metall-Kunststoff-Verbunden auch Laminate zu verstehen, bei denen das Metallblech beidseitig mit Kunstoff beschichtet ist.

Die erfindungsgemäßen Metall-Kunststoff-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech"; SHEET METAL INDUSTRIES, August 1976: W. Panknin, Ch. Schneider, M. Sodeik, "Plastic Deformation of Tinplate in Can Manufacturing"; Verpackungs-Rundschau, Heft 4/1971, Seiten 450 - 458: M. Sodeik, I. Siewert, "Die nahtlose Dose aus Weißblech"; Verpackungs-Rundschau, Heft 11/1975, Seiten 1402 bis 1407: M. Sodeik, K. Haaß, I. Siewert, "Herstellen von Dosen aus Weißblech durch Tiefziehen"; Arbeitsmappe für den Verpackungspraktiker, Metalle, Teil II, Gruppe 2, Weißblech, Lfd.-Nr. 220.042 bis 220.048 in neue Verpackung 12/87, Seite B 244 bis B 246 und neue Verpackung 1/88, Seiten B 247 bis B 250).
Bezüglich näherer Einzelheiten wird daher auf die Literatur verwiesen.

Bei Konservendosen, die aus dem erfindungsgemäßen Verbundstoff gestanzt und nach Befüllung sterilisiert werden, treten keinerlei Korrosions- bzw. Marmorierungserscheinungen an den Dosen auf. Dies ist vermutlich darauf zurückzuführen, daß die verwendeten Zinkoxid- und Manganoxidpulver durch Sulfidbildung in farblose Zinksulfide bzw. Mangansulfide überführt werden. Die Dunkelfärbung bzw. die Marmorierungserscheinungen, die ohne Zusatz von Zinkoxidpulver und Manganoxidpulver auftreten, sind vermutlich auf Eisensulfidbildung und Zinnsulfidbildung zurückzuführen. Durch Einbau der oxidischen Pulver in die Folie und/oder in den Haftvermittler oder in die Klebstoffschicht wird die Eisen- bzw. Zinnsulfidbildung an der Konservendose wirkungsvoll verhindert.

Figur 1 zeigt schematisch und beispielhaft einen möglichen Vorgang der Beschichtung mittels Direktextrusion. Der zu beschichtende Träger 1 wird z.B. von einer Vorratsrolle 2 zugeführt. Er gelangt zu einer Umlenkrolle 3, wo er mit der geschmolzenen Kunststoffmasse 4 zusammentrifft. Diese stammt unmittelbar aus dem Extruder 5. Der Träger 1 wird mit seiner Beschichtung zwischen Umlenkrolle 3 und Kühlwalze 6 hindurchgeführt, wodurch eine Gleichverteilung der Beschichtungsmasse erfolgt. Als weitere Nachbehandlungsschritte können sich ein Ofen 7 und ein System von Glättwalzen 8 anschließen. Vermöge der beschriebenen Direktextrusion lassen sich stark verbesserte Haftungseigenschaften erzielen, und die Schichtdicke kann auf unter 18 µm, vorzugsweise auf 1 bis 2 µm reduziert sein.

## Patentansprüche

1. Verbundwerkstoff aus mindestens einer Kunststoffschicht auf einem Träger, ggf. mit einer zwischenliegenden Schicht eines Haftvermittlers oder Klebers, wobei
1) die Kunststoffschicht und/oder die Haftvermittlerschicht und/oder die Kleberschicht mindestens 0,1 Gew.-%, bevorzugt 0,5 bis 8 Gew.-%, bezogen auf ihr Gesamtgewicht, eines oder mehrerer metallischer Pulver, vorzugsweise aus Aluminiumpulver, Magnesiumpulver, Zinkpulver und Manganpulver, und/oder eines Pulvers bestehend aus Zinkoxid und/oder Manganoxid enthält,
2) der Verbund erhalten wird durch Direktextrusion des geschmolzenen Kunststoffes und/oder Haftvermittlers unmittelbar auf den Träger und anschließende Weiterverarbeitung, vorzugsweise durch Pressen, Kühlen, Glätten und/oder Stanzen, und
3) der Träger aus Metall, vorzugsweise Aluminium, Weißblech oder (chromatiertem) Stahl, oder aus Holz, Furnier, Papier oder Kunststoff besteht.

2. Verbundwerkstoff nach Anspruch 1,
**dadurch gekennzeichnet**, daß
die mittlere Teilchengröße des metallischen Pulvers im Bereich von 5 bis 20 µm und die des Zinkoxids und des Manganoxids im Bereich von 0,1 bis 10 µm liegt.

3. Verwendung des Verbundwerkstoffes nach Anspruch 1 oder 2 zur Herstellung von Verpackungsbehältern, insbesondere zur Herstellung von Böden bzw. Deckeln von Dosen, Ventiltellern von Aerosoldosen sowie von Verschlüssen.
